# EUROPEAN PATENT APPLICATION

(11) **EP 4 349 236 A1**
(43) Date of publication of application: **10.04.2024**
(21) Application number: 21942673.1
(22) Date of filing: 19.10.2021
(51) Int. Cl.: A47L 11/28, A47L 11/40, G01N 21/27, G01N 27/00

(54) **CLEANING DEVICE AND DIRT DETECTION METHOD**

(30) Priority: 27.05.2021 CN 202110586184
(71) Applicant: Beijing Roborock Technology Co., Ltd., Beijing 102206 (CN)
(72) Inventor: YAN, Chengzhi, Beijing 102206 (CN); LEI, Peng, Beijing 102206 (CN)
(74) Representative: Winter, Brandl - Partnerschaft mbB
(86) International application number: PCT/CN2021/124754
(87) International publication number: WO 2022/247109

(57) **Abstract**

A cleaning device and a dirt detection method for same. The cleaning device comprises: a cleaning part (10) for cleaning a surface to be cleaned; a measurement apparatus (20) for measuring a physical attribute value of the cleaning part (10); and a processor (30) electrically connected to the measurement apparatus (20) and used for obtaining the physical attribute value measured by the measurement apparatus (20), determining the dirt degree of said surface according to the physical attribute value, and adjusting the cleaning mode of the cleaning device on the basis of the dirt degree. The physical attribute value of the cleaning part (10) of the cleaning device is measured by means of the measurement apparatus (20), and the dirt degree of said surface is determined by the processor (30) according to the measured physical attribute value, such that information of said surface can be provided for the cleaning work of the cleaning device, and thus said surface can be intelligently cleaned.

## Description

### CROSS-REFERENCE TO RELATED APPLICATION

This application is based on and claims priority to Chinese Patent Application No. 202110586184.4, filed on May 27, 2021, which is incorporated herein by reference in its entirety.

### TECHNICAL FIELD

The present disclosure relates to the field of smart apparatus technologies, and more particularly relates to a cleaning apparatus and a dirtiness detecting method for the cleaning apparatus.

### BACKGROUND

A cleaning apparatus usually has a function of cleaning a floor, for example, by spraying a clean cleaning fluid and then recovering the dirty fluid on the floor. However, in practice, due to different degrees of dirtiness of surfaces to be cleaned, cleaning the surfaces to be cleaned with the different degrees of dirtiness at the same operating power may cause the relatively dirty floors to be cleaned incompletely, and may easily lead to the waste of resources for some relatively clean floors, which may in turn adversely affect the user experience.

### SUMMARY

In view of the above problems, the present disclosure provides a cleaning apparatus and a dirtiness detecting method for the cleaning apparatus to solve or at least partially solve the above problems.

According to a first aspect of the present disclosure, a cleaning apparatus is provided. The cleaning apparatus includes:
a cleaning portion configured to clean a surface to be cleaned;
a detecting device configured to detect a physical attribute value of the cleaning portion; and
a processor configured to acquire the physical attribute value detected by the detecting device, determine, by using a comparison result of the physical attribute value and a dynamically set standard attribute value, a degree of dirtiness of the surface to be cleaned, and adjust a cleaning mode of the cleaning apparatus based on the degree of dirtiness.

Optionally, the detecting device is disposed on or opposite to the cleaning portion.

Optionally, the detecting device includes an optical detecting device for detecting an optical attribute value of the cleaning portion.

Optionally, the detecting device includes an optical emitter and an optical receiver;
the optical emitter is configured to emit an optical signal to the cleaning portion;
the optical receiver is configured to receive an optical reflection signal formed by reflection via the cleaning portion, convert the optical reflection signal into a first electrical signal for representing the optical attribute value of the cleaning portion, and output the first electrical signal to the processor; and
the processor is configured to calculate, by using the optical attribute value, the degree of dirtiness of the surface to be cleaned.

Optionally, the first electrical signal includes a voltage; the processor is configured to compare the voltage with a standard voltage and determine, according to a comparison result, the degree of dirtiness of the surface to be cleaned; and the standard voltage is a pre-detected voltage of the cleaning portion in a clean state, or, a voltage of the cleaning portion detected prior to cleaning performed by the cleaning apparatus.

Optionally, the optical receiver and the optical receiver are disposed on the same side.

Optionally, the detecting device includes an electrical detecting device for detecting an electrical attribute value of the cleaning portion.

Optionally, the cleaning portion is provided with an electrode;
the detecting device is connected to the electrode on the cleaning portion, and configured to detect a second electrical signal for representing the electrical attribute value of the cleaning portion and output the second electrical signal to the processor; and
the processor is configured to calculate, by using the electrical attribute value, the degree of dirtiness of the surface to be cleaned.

Optionally, the detecting device is a capacitive sensor for detecting a capacitance of the cleaning portion and outputting the capacitance to the processor as the second electrical signal; and
the processor is configured to calculate a capacitance variation parameter of the cleaning portion according to the capacitance and a standard capacitance, and determine, by using the capacitance variation parameter, the degree of dirtiness of the surface to be cleaned.

Optionally, the detecting device is configured to detect a conductivity of the cleaning portion and output the conductivity to the processor as the second electrical signal; and
the processor is configured to calculate a conductivity variation parameter of the cleaning portion according to the conductivity and a standard conductivity, and determine, according to the conductivity variation parameter, the degree of dirtiness of the surface to be cleaned.

Optionally, the cleaning apparatus further includes a fluid output device and a fluid recovery device, wherein the fluid output device is configured to spray a fluid onto the cleaning portion or the surface to be cleaned, and the fluid recovery device is configured to cause a dirty fluid on the surface to be cleaned or the cleaning portion to flow into the fluid recovery device through a dirty-fluid drainage pipeline.

Optionally, the fluid output device includes: a first container for storing the fluid; a fluid output pipeline communicated with the first container and configured to transport the fluid in the first container to the cleaning portion or the surface to be cleaned; and at least one spray nozzle communicated with the fluid output pipeline and configured to spray the fluid onto the cleaning portion or the surface to be cleaned.

Optionally, the fluid recovery device includes: a second container for storing the dirty fluid; a second sensor disposed in the second container and configured to detect a fluid level in the second container; at least one suction nozzle configured to suck the dirty fluid on the cleaning portion or the surface to be cleaned; and a suction pipeline that connects the at least one suction nozzle to the second container and is configured to suck the dirty fluid from the suction nozzle into the second container.

According to a second aspect of the present disclosure, a dirtiness detecting method for a cleaning apparatus is provided. The dirtiness detecting method includes:
detecting a physical attribute value of a cleaning portion of a cleaning apparatus, the cleaning portion being configured to clean a surface to be cleaned;
determining, by using a comparison result of the physical attribute value and a dynamically set standard attribute value, a degree of dirtiness of the surface to be cleaned; and
adjusting a cleaning mode of the cleaning apparatus based on the degree of dirtiness.

Optionally, the physical attribute value includes an optical attribute value;
detecting the physical attribute value of the cleaning portion of the cleaning apparatus includes: emitting an optical signal by an optical emitter; receiving, by an optical receiver, an optical reflection signal formed by reflection via the cleaning portion; and converting, by the optical receiver, the optical reflection signal into a first electrical signal for representing an optical attribute value of the cleaning portion; and
determining, by using the comparison result of the physical attribute value and the dynamically set standard attribute value, the degree of dirtiness of the surface to be cleaned includes: calculating, by using a difference between the optical attribute value and a standard optical attribute value, the degree of dirtiness of the surface to be cleaned;
wherein the standard optical attribute value includes a pre-detected optical attribute value of the cleaning portion in a clean state, or, an optical attribute value of the cleaning portion detected during power-up operation of the cleaning apparatus.

Optionally, the physical attribute value includes an electrical attribute value;
detecting the physical attribute value of the cleaning portion of the cleaning apparatus includes: detecting a second electrical signal for representing an electrical attribute value of the cleaning portion, the second electrical signal including at least one of a conductivity, a capacitance and a resistance; and
determining, by using the comparison result of the physical attribute value and the dynamically set standard attribute value, the degree of dirtiness of the surface to be cleaned includes: calculating, according to the electrical attribute value and the standard electrical attribute value, an electrical-signal variation parameter of the cleaning portion, and calculating, by using the electrical-signal variation parameter, the degree of dirtiness of the surface to be cleaned;
wherein the standard electrical attribute value includes a pre-detected electrical attribute value of the cleaning portion in a clean state, or, an electrical attribute value of the cleaning portion detected during power-up operation of the cleaning apparatus.

Optionally, adjusting the cleaning mode of the cleaning apparatus based on the degree of dirtiness includes:
acquiring a plurality of pre-divided levels of dirtiness corresponding to different degrees of dirtiness;
determining, based on the degree of dirtiness of the surface to be cleaned, a target level of dirtiness corresponding to the surface to be cleaned; and
acquiring a cleaning mode of the cleaning apparatus that matches the target level of dirtiness, and controlling the cleaning apparatus to work according to a cleaning parameter corresponding to the cleaning mode, the cleaning parameter including an operating power of a fan and/or a motor driving the cleaning portion.

The present disclosure provides the cleaning apparatus and the dirtiness detecting method for the cleaning apparatus. Based on the cleaning apparatus provided by the present disclosure, the physical attribute value of the cleaning portion of the cleaning apparatus is detected by the detecting device, and the degree of dirtiness of the surface to be cleaned is determined by the processor according to the detected physical attribute value, such that information about the surface to be cleaned can be provided for the cleaning apparatus to perform cleaning, and further, the surface to be cleaned can be intelligently cleaned in a targeted manner.

The above description is merely an overview of the technical solutions of the present disclosure. In order to understand the technical means of the present disclosure more clearly, the implementation can be carried out in accordance with the contents of the description; and in order to make the aforesaid and other objectives, features and advantages of the present disclosure more obvious and easier to understand, the specific embodiments of the present disclosure are given as below.

The aforesaid and other objectives, advantages and features of the present disclosure will be more apparent to those skilled in the art from the following detailed description of the specific embodiments of the present disclosure with reference to the accompanying drawings.

### BRIEF DESCRIPTION OF THE DRAWINGS

Various other advantages and benefits will be apparent to those of ordinary skill in the art by reading the detailed description of the preferred embodiments below. The accompanying drawings are intended only for the purpose of illustrating the preferred embodiments and shall not be construed as limitations to the present disclosure. In addition, the same reference numbers are used to represent the same components throughout the drawings, in which:
FIG. 1 is a schematic structural diagram of a part of a cleaning apparatus according to an embodiment of the present disclosure;
FIG. 2 is a schematic structural diagram of a cleaning apparatus according to an embodiment of the present disclosure;
FIG. 3 is a schematic structural diagram of a cleaning apparatus according to another embodiment of the present disclosure;
FIG. 4 is a schematic structural diagram of a part of a cleaning apparatus according to another embodiment of the present disclosure;
FIG. 5 is a schematic diagram of a voltage of a cleaning portion changing with a color of the cleaning portion according to an embodiment of the present disclosure;
FIG. 6 is a schematic structural diagram of a cleaning apparatus according to yet another embodiment of the present disclosure; and
FIG. 7 is a schematic flowchart of a dirtiness detecting method for a cleaning apparatus according to still another embodiment of the present disclosure.

### DETAILED DESCRIPTION

In the following description, a large number of specific details are provided for more thorough understanding of the present disclosure. However, it is apparent to those skilled in the art that the present disclosure may be implemented without one or more of these details. In other examples, some of the technical features well known in the art will not be described in order to avoid confusion with the present disclosure.

It should be noted that the terms used herein are merely used to describe specific embodiments and are not intended to limit exemplary embodiments of the present disclosure. As used herein, the singular forms are also intended to compass the plural forms unless the context clearly dictates otherwise. In addition, it should be further understood that the terms "include" and/or "comprise" used in this description indicate the presence of the features, integers, steps, operations, elements and/or components, but do not exclude the presence or addition of one or more other features, integers, steps, operations, elements, components and/or combinations thereof.

Exemplary embodiments according to the present disclosure will now be described in more detail with reference to the accompanying drawings. However, these exemplary embodiments may be implemented in a variety of different forms and should not be construed as being limited to the embodiments set forth herein. It should be understood that these embodiments are provided to make the disclosure of the present disclosure thorough and complete and to fully convey the concepts of these exemplary embodiments to those of ordinary skill in the art.

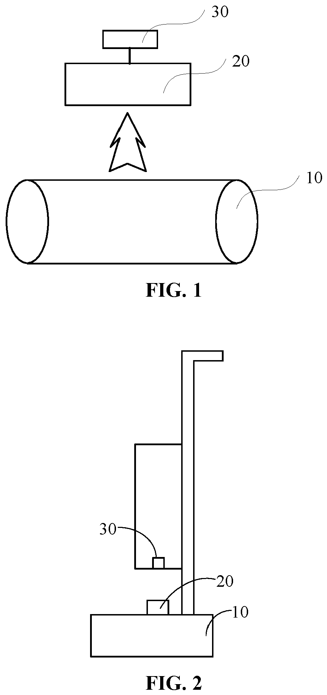

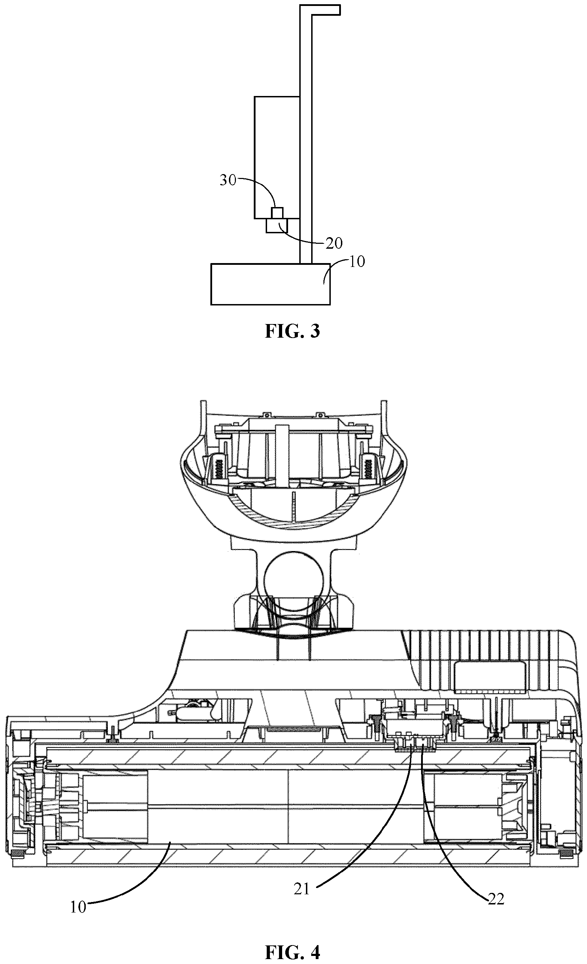

An embodiment of the present disclosure provides a cleaning apparatus. It is known from FIG. 1 that the cleaning apparatus provided by the embodiment of the present disclosure may include a cleaning portion 10, a detecting device 20, and a processor 30. The cleaning portion 10 is configured to clean a surface to be cleaned. The detecting device 20 is configured to detect a physical attribute value of the cleaning portion 10, and optionally, the detecting device 20 may be disposed on (as shown in FIG. 2) or opposite to (as shown in FIG. 3) the cleaning portion 10. The processor 30 is electrically connected to the detecting device 20 and configured to acquire the physical attribute value detected by the detecting device 20, determine, by using the physical attribute value and a dynamically set standard attribute value, the degree of dirtiness of the surface to be cleaned, and adjust a cleaning mode of the cleaning apparatus based on the degree of dirtiness.

In some preferred embodiments, the cleaning portion may be, for example, one or more roller brushes (a roller brush usually refers to a brush with a substantially horizontal axis of rotation), or one or more disk brushes (a disk brush usually refers to a brush with a substantially vertical axis of rotation). Of course, the cleaning portion may also be various other components capable of serving a cleaning function.

According to the cleaning apparatus provided by the embodiment of the present disclosure, by disposing the detecting device 20 on the cleaning apparatus to detect the physical attribute value of the cleaning portion 10 of the cleaning apparatus, the processor 30 may be used to intelligently determine, according to the physical attribute value and without artificial judgment, the degree of dirtiness of the surface to be cleaned, such that information about the surface to be cleaned can be provided for the cleaning apparatus to perform cleaning, and further, the user experience can be improved while the intelligence of the cleaning apparatus is improved.

In specific applications, the cleaning apparatus may be, but is not limited to, a sweeping robot, a mopping robot, a floor polishing robot, a weeding robot, or a handheld cleaning apparatus capable of cleaning areas such as floors, wall surfaces, desktops, carpets, walls, or glass. The cleaning portion 10 in the cleaning apparatus may be provided with a cleaning part such as mopping cloth, a mopping sponge or a mopping roller brush, so as to clean the surface to be cleaned. The processor 30 may be implemented using various application specific integrated circuits (ASICs), digital signal processors (DSPs), digital signal processing devices (DSPDs), programmable logic devices (PLDs), field programmable gate arrays (FPGAs), micro-central control elements, microprocessors or other electronic elements.

In addition, with the increase of both of the number of use and the service time of the cleaning apparatus, the cleaning part on the cleaning portion 10 will change in a clean state. Therefore, in this embodiment, the processor 30 may determine, by using a comparison result of the physical attribute value and the dynamically set standard attribute value, the degree of dirtiness of the surface to be cleaned. That is, the standard attribute value is variable. The standard attribute value may be a default standard attribute value set by the factory when the cleaning portion 10 on the cleaning apparatus is used for the first time. With the increase of both of the number of use and the service time of the cleaning portion 10, the surface of the cleaning portion 10 may change in color. Therefore, the corresponding standard attribute value of the cleaning portion 10 may be adjusted at any time. For example, the physical attribute value detected during power-up operation of the cleaning apparatus may serve as the standard attribute value. In addition, the physical attribute value in the clean state, detected after the cleaning portion 10 finishes self-cleaning, may also be recorded as the standard attribute value. In this embodiment, the degree of dirtiness of the surface to be cleaned can be accurately determined by using the comparison result of the physical attribute value and the dynamically set standard attribute value, such that the cleaning efficiency is improved.

Further, the processor 30 in the cleaning apparatus may intelligently adjust the cleaning mode of the cleaning apparatus based on the acquired degree of dirtiness of the surface to be cleaned, thereby ensuring effective cleaning of the surface to be cleaned and rational use of cleaning resources. Optionally, the cleaning apparatus may be correspondingly provided with multiple cleaning modes, and different cleaning modes may correspond to different operating parameters of the cleaning apparatus. For example, in a deep cleaning mode, a fan and/or a motor driving the cleaning portion may have relatively high operating power, water output and water output frequency; and in a simple cleaning mode, the fan and/or the motor driving the cleaning portion may have relatively low operating power, water output and water output frequency. Therefore, for the surface to be cleaned with different degrees of dirtiness, the cleaning mode of the cleaning apparatus may be adaptively adjusted to finish cleaning and ensure rational use of cleaning resources. In practice, the type of the cleaning mode of the cleaning apparatus and the operating parameters of the cleaning apparatus corresponding to the respective cleaning modes can be set according to different requirements, which is not limited in the embodiment of the present disclosure.

In the embodiment of the present disclosure, the detecting device 20 may be an optical detecting device or an electrical detecting device; and for the different types of detecting devices 20, the detected and acquired physical attribute values of the cleaning portion 10 in the cleaning apparatus may be different. The different types of detecting devices 20 will be described in detail as below.

FIG. 4 is a schematic structural diagram of a part of a cleaning apparatus according to another embodiment of the present disclosure. In the cleaning apparatus shown in FIG. 4, the detecting device 20 may be an optical detecting device 20 for detecting an optical attribute value of the cleaning portion 10. It can be known from FIG. 4 that the detecting device 20 may include an optical emitter 21 and an optical receiver 22 that are disposed on the same side. FIG. 4 merely schematically illustrates relative positions of the optical emitter 21 and the optical receiver 22. In practice, the positions of the optical emitter 21 and the optical receiver 22 may be adjusted according to different requirements, which is not limited in the embodiment.

The optical emitter 21 is configured to emit an optical signal to the cleaning portion 10. The optical receiver 22 is configured to receive an optical reflection signal formed by reflection via the cleaning portion, convert the optical reflection signal into a first electrical signal for representing an optical attribute value of the cleaning portion 10, and output the first electrical signal to a processor 30. The processor 30 is configured to calculate, by using the optical attribute value, the degree of dirtiness of a surface to be cleaned.

For example, the detecting device 20 in this embodiment may include a pair of infrared germinate transistors, one of which serves as the optical emitter 21 and the other of which serves as the optical receiver 22, i.e., the optical emitter 21 is an infrared emitter and the optical receiver 22 is an infrared receiver. It can be known from FIG. 4 that the optical emitter 21 may emit infrared rays to the cleaning portion 10, and the optical receiver 22 is configured to receive infrared rays (a reflection signal) reflected by the cleaning portion 10. As shown in FIG. 4, it is necessary to dispose the infrared germinate transistors on the same side, i.e., the infrared germinate transistors are disposed on the same side with respect to the cleaning portion 10, and are disposed opposite to the cleaning portion 10, so as to ensure that the infrared rays reflected by the cleaning portion 10 may be received by the optical receiver 22. Further, upon receiving the reflection signal reflected by the cleaning portion 10, the optical receiver 22 may convert the reflection signal into a first electrical signal and output the first electrical signal to the processor 30.

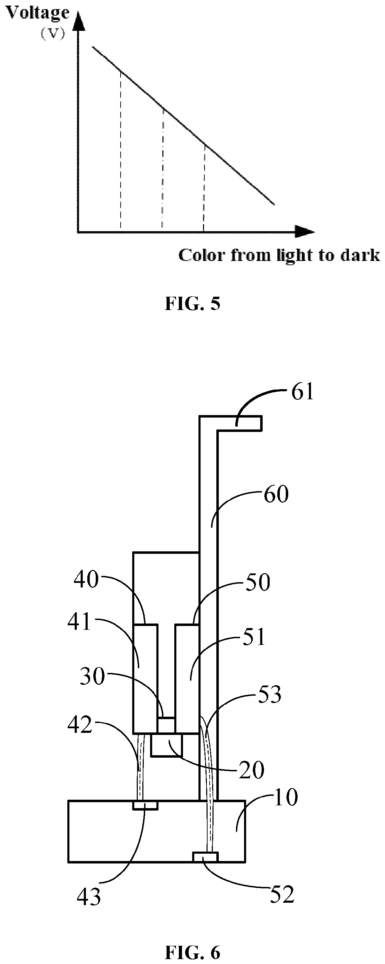

For example, if the surface of the cleaning portion 10 is covered with a light-colored velvet fabric, the cleaning portion 10 is of a light color in a clean state, so the reflection signal reflected by the cleaning portion 10 is of high light intensity. However, when a brush head is dirty, the color of the brush head becomes darker and the reflection signal reflected by the cleaning portion 10 is of low light intensity. Further, the optical receiver 22 may convert the received reflection signals with different intensities into different voltages, and then transmit the different voltages to the processor 30 as the first electrical signal. As shown in FIG. 5, the lighter the color of the cleaning portion 10 is, the higher the light intensity of the reflection signal reflected by the cleaning portion 10 is and the higher the voltage is; and the darker the color of the cleaning portion 10 is, the lower the light intensity is and the lower the voltage is.

As stated above, the first electrical signal may include a voltage for representing the optical attribute value, which may be directly detected by using the detecting device 20 and transmitted to the processor 30. Further, upon receiving a voltage transmitted by an optical reflector, the processor 30 compares the voltage with a standard voltage, and determines, according to a comparison result, the degree of dirtiness of the surface to be cleaned. In the embodiment of the present disclosure, the standard electrical attribute value is a pre-detected electrical signal of the cleaning portion in a clean state. For example, the standard voltage may be a detected voltage of the cleaning portion 10 that is not used and thus is in a clean state. In practice, the cleaning part on the cleaning portion 10 may change in color with the number of use and the service time. In the embodiment of the present disclosure, the standard voltage may also be set to the voltage detected during power-up operation of the cleaning portion, which can solve the problem of the difference in the cleaning portions of different colors and different materials, thereby making a detection result of the degree of dirtiness of the surface to be cleaned more accurate. In other words, when the cleaning apparatus is used this time, the electrical signal of the cleaning portion 10 may be detected as a standard voltage for subsequent judgment and comparison during power-up operation of the cleaning apparatus. Optionally, after use of the cleaning apparatus, the standard voltage may be initialized, and the standard voltage of the cleaning portion 10 in a clean state may be detected first at the next startup. The first electrical signal may be compared with the standard voltage, and the degree of dirtiness of the surface to be cleaned may be determined according to the difference between the first electrical signal and the standard voltage when the degree of dirtiness of the surface to be cleaned is determined according to the comparison result. The smaller the difference is, the lower the degree of dirtiness is, and the cleaner the surface to be cleaned is; otherwise, the higher the degree of dirtiness is, the dirtier the surface to be cleaned is.

For example, if the standard voltage of the light-colored cleaning portion 10 is set to *a*, when the processor 30 receives a higher voltage transmitted by the optical reflector, it means that the cleaning portion 10 is of a light color. At this time, the closer the voltage is to *a*, the smaller the difference is, indicating that the degree of dirtiness of the surface to be cleaned is lower (i.e., the surface to be cleaned is relatively clean); and when the voltage is low, it means that the darker the color of the cleaning portion 10 is, the bigger the difference between the voltage and the standard voltage *a* is, and the higher the degree of dirtiness of the surface to be cleaned is at this time (i.e., the surface to be cleaned is dirty). The shade of color in the embodiment may be the shade of the same color. For example, a determination may be made based on dark blue, light blue and intermediate transition colors of the cleaning part when the cleaning part used by the cleaning portion 10 is blue.

Of course, the optical emitter 21 may also emit light of other wavelengths, and correspondingly, the optical receiver 22 is a receiver capable of receiving light waves of corresponding lengths, which is not limited in the embodiment of the present disclosure. In addition, the cleaning portion 10 of different colors is correspondingly of different reflectivity. Therefore, the processor 30 may also automatically calculate the color of the cleaning portion 10 with reference to reflectivity curve data, and then compare a voltage value corresponding to the detected color of the cleaning portion 10 with a standard color voltage value of the cleaning portion 10 so as to determine the degree of dirtiness of the surface to be cleaned.

In the embodiment of the present disclosure, different levels of dirtiness may be set in advance for different degrees of dirtiness of the surface to be cleaned. For example, a total number of four levels may be set, namely, a level 1, a level 2, a level 3, and a level 4 whose degrees of dirtiness increase in sequence; moreover, different threshold ranges may be divided according to the different physical attribute values of the cleaning portion 10, such as a threshold range 1, a threshold range 2, a threshold range 3 and a threshold range 4; and a corresponding relationship is built between the threshold ranges and the levels of dirtiness. For example, if the difference between the voltage received by the processor and the standard voltage corresponds to the threshold range 1, the corresponding level of dirtiness of the surface to be cleaned is the level 1; if the difference between the voltage and the standard voltage corresponds to the threshold range 2, the corresponding level of dirtiness is the level 2; and so on. Then, upon working out the physical attribute value (for example, voltage) of the cleaning portion 10, the processor 30 may further determine a target threshold range of the physical attribute value, and then determine the level of dirtiness corresponding to the target threshold range as the level of dirtiness of the surface to be cleaned. In practice, since the cleaning parts of different materials or different types may have different cleaning abilities, different threshold ranges and levels of dirtiness corresponding to the threshold ranges may be divided and set for different types of cleaning parts according to different requirements, which is not limited in the embodiment of the present disclosure. In practice, multiple sets of standard attribute values and multiple sets of threshold ranges of the levels of dirtiness may be stored in the cleaning apparatus or a cloud. Optionally, at the moment of powering up the cleaning apparatus, the corresponding standard attribute value and the threshold range of the matched level of dirtiness may be determined first according to a characteristic parameter, for example, the type of the cleaning part on the cleaning portion, so as to provide a basis of determination for subsequent determination of the degree of dirtiness of the surface to be cleaned.

In an optional embodiment of the present disclosure, the detecting device 20 may also be configured to detect a first physical attribute value of the cleaning portion 10 when the optical emitter 21 is turned off, and a second physical attribute value of the cleaning portion 10 when the optical emitter 21 emits white light. The processor 30 is configured to determine the color of the cleaning portion 10 according to the first physical attribute value and the second physical attribute value. Specifically, the first physical attribute value and the second physical attribute value may represent RGB signals of the cleaning portion 10 in a natural environment and a white-light environment respectively. The processor 30 may use a difference between the first physical attribute value and the second physical attribute value as an RGB signal value of the cleaning portion 10, and determine the color of the cleaning portion 10 after white balance correction, so as to determine, by using the color of the cleaning portion 10, the degree of dirtiness of the surface to be cleaned.

In another optional embodiment of the present disclosure, the detecting device 20 may be an electrical detecting device 20 for detecting an electrical attribute value of the cleaning portion 10. Optionally, the cleaning portion 10 is provided with an electrode. The detecting device 20 is connected to the electrode on the cleaning portion 10 and configured to detect a second electrical signal for representing the electrical attribute value of the cleaning portion 10 and output the second electrical signal to the processor 30. The processor 30 is configured to determine, according to the electrical attribute value, the degree of dirtiness of the surface to be cleaned.

In the embodiment of the present disclosure, a group of electrodes may be disposed on the cleaning portion 10 as a positive electrode and a negative electrode. In practice, the electrode may be disposed on the cleaning portion 10 in the form of a patch. The detecting device 20 is a capacitive sensor, and the capacitive sensor may be connected to the two electrodes on the cleaning portion 10, and configured to detect a capacitance of the cleaning portion 10, and output the detected capacitance to the processor 30 as the second electrical signal. The processor 30 is configured to calculate a capacitance variation parameter of the cleaning portion 10 according to the capacitance and a standard capacitance, and determine, according to the capacitance variation parameter, the degree of dirtiness of the surface to be cleaned. The standard capacitance may be a pre-detected capacitance of the cleaning portion 10 in a clean state, or a capacitance of the cleaning portion 10 detected during power-up operation of the cleaning apparatus.

In practice, during the use of the cleaning apparatus, if the surface to be cleaned is clean, media carried on the cleaning portion 10 of the cleaning apparatus may be less than that when the surface to be cleaned is dirty, and the capacitance detected by the capacitive sensor is relevant to an area of the electrode, a distance between the electrodes and the media between the electrodes. In the embodiment of the present disclosure, if the sizes of the electrodes and the distance between the electrodes are kept constant, the only factor influencing a detection result of the capacitive sensor is the media between the electrodes. Therefore, in the solution provided by the embodiment of the present disclosure, the degree of dirtiness of the surface to be cleaned can be determined effectively and quickly by detecting, by using the capacitive sensor, the capacitance of the cleaning portion 10 and calculating, by using the processor 30, the capacitance variation parameter before and after the cleaning operation of the cleaning portion 10. In the embodiment, the capacitance variation parameter may be a difference between a capacitance value currently detected by the capacitive sensor and a pre-detected capacitance value of the cleaning portion 10 in a clean state, or may also be a difference between the capacitance value currently detected by the capacitive sensor and an initial capacitance value of the cleaning portion 10 at the start of power-up operation of the cleaning apparatus, which can be specifically set according to different requirements. Taking a floor in a house as an example of the surface to be cleaned, the capacitance detected during the cleaning operation of the cleaning portion 10 is taken as a first capacitance, and the capacitance detected after the cleaning operation is taken as a second capacitance. A difference between the first capacitance and the second capacitance is used as the capacitance variation parameter of the cleaning portion 10, and then the degree of dirtiness of the surface to be cleaned is determined based on the capacitance variation parameter.

For different cleaning environments and types of the cleaning parts, the media between the two electrodes may be different, and hence dielectric constants of the media may change. Therefore, the levels of dirtiness of the surface to be cleaned corresponding to the different capacitance variation parameters are adaptively set and adjusted based on the cleaning environment of the cleaning apparatus and the types of the cleaning parts used, and then the degree of the dirtiness of the surface to be cleaned is calculated. In the embodiment, the method of setting the degree of dirtiness is similar to a setting logic of the optical detecting device.

In an optional embodiment of the present disclosure, the electrode is a conductive electrode; the detecting device 20 is configured to detect a conductivity of the cleaning portion 10 as the second electrical signal; and the processor 30 is configured to calculate a conductivity variation parameter of the cleaning portion 10 according to the conductivity and a standard conductivity, and determine, according to the conductivity variation parameter, the degree of dirtiness of the surface to be cleaned. In the embodiment, the conductivity variation parameter may be a variation value, a variation amplitude, a variation law and the like of the conductivity. The standard conductivity may be the pre-detected capacitance of the cleaning portion 10 in a clean state, or the standard conductivity of the cleaning portion 10 detected during power-up operation of the cleaning apparatus.

For different cleaning environments and types of the cleaning parts, the conductivity may be different. For example, the more impurities attached to the cleaning portion 10 are, the larger the difference between the real-time detected conductivity and the standard conductivity may be, i.e., the larger the difference between the real-time detected conductivity and the standard conductivity is, the dirtier the surface to be cleaned may be, and the smaller the difference between the real-time detected conductivity and the standard conductivity is, the cleaner the surface to be cleaned may be. Therefore, in the embodiment of the present disclosure, the levels of dirtiness of the surface to be cleaned corresponding to different conductivity variation parameters are adaptively set and adjusted according to the cleaning environment of the cleaning apparatus and the types of the cleaning parts used, and then the degree of dirtiness of the surface to be cleaned is determined.

The foregoing describes the solution that the capacitance or conductivity of the cleaning portion 10 is transmitted to the processor 30 as the second signal, and the processor 30 calculates the electrical attribute value accordingly and determines the degree of dirtiness of the surface to be cleaned. In practice, a resistance of the cleaning portion10 may also be transmitted to the processor 30 as the second electrical signal, and the processor 30 may determine, according to a variation law of a resistance signal, the degree of dirtiness of the surface to be cleaned, such that the degree of dirtiness of the surface to be cleaned can be intelligently detected without artificial judgment.

The foregoing introduces the specific implementation of detecting the optical attribute value and the electrical attribute value by the optical detecting device and the electrical detecting device respectively. In an optional embodiment of the present disclosure, the detecting device 20 may include both of the optical detecting device and the electrical detecting device, i.e., the detecting device 20 may also be configured to detect the optical attribute value and the electrical attribute value of the cleaning portion 10; and the processor 30 may determine, by using the optical attribute value and the electrical attribute value, the degree of dirtiness of the surface to be cleaned. For example, different weights may be assigned to the optical attribute value and the electrical attribute value. After the detecting device 20 detects the optical attribute value and the electrical attribute value, the final physical attribute value is calculated by using the optical attribute value and the electrical attribute value with reference to their respective weights, and then the degree of dirtiness of the surface to be cleaned is determined by using the physical attribute value. The weights may be assigned to the optical attribute value and the electrical attribute value based on the characteristics of materials, colors and the like of the cleaning parts on the cleaning portion 10.

More specifically, the reflection signal and a resistance variation parameter of the cleaning portion are used as a combination to determine the degree of dirtiness of the surface to be cleaned.

In an optional embodiment of the present disclosure, the cleaning apparatus may further include a fluid output device 40 and a fluid recovery device 50. The fluid output device 40 is a device capable of controlling any of cleaning fluids such as clear water, a cleaning agent, or a mixture of clear water and a cleaning agent. The fluid output device 40 may spray the fluid onto the surface to be cleaned, and then cleaning may be carried out by the cleaning parts. The fluid recovery device 50 is configured to enable the dirty fluid on the surface to be cleaned or the cleaning portion to flow into the fluid recovery device 50 through a dirty-fluid drainage pipeline by means of a suction force of the fan, thereby achieving a dirty-fluid recovery function, i.e., recovering the dirty fluid generated after the surface to be cleaned is cleaned. Specifically, the fluid recovery device 50 may achieve the recovery of the dirty fluid in a way that the fan drives a suction nozzle to suck the dirty fluid.

Optionally, the fluid output device 40 may include a first container 41 and a fluid output pipeline 42, wherein the first container 41 is configured to store the fluid, and the fluid may be any one of clear water, a cleaning agent and a mixture of clear water and the cleaning agent. During the use of the cleaning apparatus, the surface to be cleaned may be cleaned by spraying the fluid onto the surface to be cleaned. In addition, the fluid output pipeline 42 may be communicated with the first container 41, and the fluid in the first container 41 is transported, by a fluid transport pipeline, to the cleaning portion or the surface to be cleaned. Optionally, the fluid output pipeline 42 may be a hard pipe extending along a path or a hose that may change the path, which may be specifically selected according to the type and the structural design of the cleaning apparatus.

Further, the fluid output device 40 may further include at least one spray nozzle 43 and may be communicated with the spray nozzle 43 by the fluid output pipeline 42 such that the fluid in the first container 41 is transported to the spray nozzle by the fluid output pipeline, and in turn the fluid is sprayed onto the cleaning portion 10 and/or the surface to be cleaned. During the use of the cleaning apparatus, the processor 30 may be configured to control the amount of the cleaning fluid sprayed by the fluid output device 40 in a single pass, the frequency of spraying the cleaning fluid, the frequency of recovering the dirty fluid, etc.

As stated above, the cleaning apparatus may also be provided with a fan and a motor driving the cleaning portion to perform a cleaning operation. Optionally, in the embodiment of the present disclosure, the processor 30 in the cleaning apparatus may also adjust, based on the degree of dirtiness of the surface to be cleaned, the operating power of the fan and/or the motor driving the cleaning portion. That is, upon determining the degree of dirtiness of the surface to be cleaned, the processor 30 may adaptively adjust, based on the degree of dirtiness of the surface to be cleaned, the operating power of the fan and/or the motor driving the cleaning portion in the cleaning apparatus. For example, for a relatively clean floor, the apparatus only needs to perform cleaning normally, or the power of the fan and/or motor may be reduced adaptively. However, for a dirty floor, more cleaning fluid may need to be sprayed. In this case, it is necessary to increase the operating power of the fan and/or the motor, and recover the dirty fluid on the floor in time, so as to effectively improve the user experience while achieving intelligent cleaning.

As mentioned in the foregoing embodiments, different levels of dirtiness may be set corresponding to different degrees of dirtiness. Optionally, the processor 30 may acquire a plurality of pre-divided levels of dirtiness corresponding to the different degrees of dirtiness when adjusting the operating power of the fan and/or motor driving the cleaning portion; then determine, based on the degrees of dirtiness of the surface to be cleaned, a target level of dirtiness corresponding to the surface to be cleaned; and finally acquire the operating power of the fan and/or the motor driving the cleaning portion, which matches the target level of dirtiness, such that the cleaning apparatus may be controlled to work at the operating power of the fan and/or the motor driving the cleaning portion.

For example, if there are four levels of dirtiness: a level 1, a level 2, a level 3, and a level 4, the operating power of the fan and/or the motor driving the cleaning portion corresponding to the level 1, the level 2, the level 3 and the level 4 respectively may be preset. For example, the level 1 corresponds to the fan's operating power x1 and the motor's operating power y1; the level 2 corresponds to the fan's operating power x2 and the motor's operating power y2; the level 3 corresponds to the fan's operating power x3 and the motor's operating power y3; and the level 4 corresponds to the fan's operating power x4 and the motor's operating power y4. During the determination of the target level of dirtiness of the surface to be cleaned corresponding to the plurality of levels of dirtiness, the preset fan's operating power and motor's operating power that match the target level of dirtiness are taken as target fan's operating power and target motor's operating power required by the current cleaning apparatus, and then the cleaning apparatus is controlled to clean at the acquired fan's operating power and/or motor's operating power, such that the surface to be cleaned can be effectively cleaned, and rational use of cleaning resources is ensured.

In practice, as shown in FIG. 6, the cleaning apparatus may further include an apparatus body 60, the apparatus body 60 may be an elongated cylinder with a cavity as a whole, and the processor 30, the fluid output device 40 and the fluid recovery device 50 may all be disposed in the cavity of the apparatus body 60, such that the space of the cleaning apparatus may be reasonably utilized and the overall size of the cleaning apparatus may be reduced. One end of the apparatus body 60 may be connected to the cleaning portion 10. In the case that the cleaning apparatus is a handheld cleaning apparatus, the other end of the apparatus body 60 is provided with a handheld portion 61. When the cleaning apparatus is in use, an entirety formed by the handheld portion 61 and the apparatus body 60 is inclined relative to the cleaning portion 10. In this way, a down force generated by the gravity of the apparatus body 60 makes the cleaning parts fit more closely with the surface to be cleaned. Besides, it is convenient for a user to push the cleaning portion 10 by using the handheld portion 61, which saves more effort. In the case that the cleaning apparatus is placed on a charging pile, the entirety formed by the handheld portion 61 and the apparatus body 60 is perpendicular to the cleaning portion 10, such that the space occupied by a handheld floor cleaning apparatus is reduced.

During the use of the cleaning apparatus, the fluid in the fluid output device 40 may be reduced with increase of the service time. Therefore, in the embodiment of the present disclosure, a first sensor may also be disposed in the fluid output device 40. The first sensor may be disposed in the first container 41 of the fluid output device 40 and configured to detect a fluid level of the first container 41. Alternatively, the first sensor is disposed in the fluid output pipeline 42 of the fluid output device 40 and configured to detect whether the fluid is in the fluid output pipeline 42 or not. The first sensor may be connected to the processor 30, and the processor 30 may determine, according to a detection result of the first sensor, whether to control the cleaning apparatus to spray the fluid or not, or whether to control the cleaning apparatus to perform cleaning, or whether it is necessary to add the clean fluid to the fluid output device 40. For example, in the case that the processor 30 determines, according to the detection result of the first sensor, that the fluid level of the first container is lower than a first set level, or there is no fluid in the fluid output pipeline, it can be determined that the fluid needs to be added into the fluid output device 40.

Optionally, the fluid recovery device 50 may include a second container 51 for storing a dirty fluid, of which the specific shape is not strictly limited. The second container 51 may be provided with a second sensor for detecting a fluid level in the second container. The second sensor may be connected to the processor 30, and the processor 30 may determine, according to a detection result (for example, the fluid level in the second container) of the second sensor, whether it is necessary to immediately clear up the recovered dirty fluid stored in the fluid recovery device 50, so as to ensure successful cleaning of the cleaning apparatus. For example, in the case that the processor 30 determines that the fluid level of the second container 51 is higher than a second set level according to the detection result of the second sensor, it is determined that the dirty fluid in the second container needs to be cleared up immediately. In the embodiment, the first sensor and the second sensor may be non-contact sensors or contact sensors, with the non-contact sensors being capacitive sensors.

Optionally, the fluid recovery device 50 may further include at least one suction nozzle 52, as well as a suction pipeline 53 that connects the suction nozzle 52 to the second container. The suction nozzle 52 may be disposed on the cleaning portion 10 and configured to suck the dirty fluid on the cleaning portion 10 and/or the surface to be cleaned, and the sucked dirty fluid is transported to the second container by the suction pipeline 53. The suction pipeline 53 may be a hard pipe extending along a path, or a hose that may change the path, specifically depending on the type and the structural design of the cleaning apparatus. Of course, in addition to what is described above, the fluid recovery device 50 may further include a fan for driving the suction nozzle 52 to suck the dirty fluid.

In the embodiment of the present disclosure, the cleaning apparatus may also be provided with a voice prompt device, which is connected to the processor 30 and configured to send voice prompt information. For example, as stated above, the processor 30 may determine, according to the detection result of the first sensor or the second sensor, whether it is necessary to add the fluid into the first container or whether it is necessary to clear up the dirty fluid in the second container. Optionally, the voice prompt device may also be configured to send corresponding voice prompt information to remind the user to maintain the cleaning apparatus in time when the processor 30 determines, according to the detection result of the first sensor, that it is necessary to add the fluid into the fluid output device 40, and/or that it is necessary to clear up the recovered dirty fluid stored in the fluid recovery device 50. Of course, the voice prompt device may also send other prompt information related to the cleaning apparatus, which is not limited in the embodiment of the present disclosure. In addition to voice prompt, the cleaning apparatus in the embodiment may also be provided with a display device (for example, a display screen), which is connected to the processor and may be configured to display relevant parameters of the cleaning apparatus, such as the degree of dirtiness of the surface to be cleaned and a power level of the fan.

In an optional embodiment of the present disclosure, after the processor 30 determines the degree of dirtiness of the surface to be cleaned and determines whether it is necessary to add the fluid into the first container or whether it is necessary to clear up the dirty fluid in the second container, prompt information such as voice, texts, pictures and/or animation is displayed by the voice prompt device and/or the display device; and at the same time, current executable operations, such as reminding the user to add clear water, add a cleaning agent, clearing up the dirty fluid, changing the cleaning parts and switching cleaning modes, are recommended to the user. Then, the user performs or triggers different operation instructions according to the prompt information to further complete the cleaning. Thus, the cleaning is completed by adding a human-computer interaction function with reference to the actual degree of dirtiness and cleaning needs of the user, which further improves the user experience.

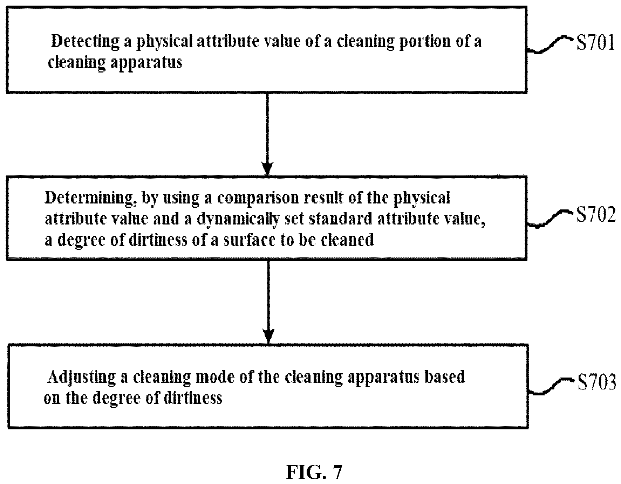

Based on the same concept, an embodiment of present disclosure further provides a dirtiness detecting method for a cleaning apparatus. It can be known from FIG. 7 that the dirtiness detecting method for the cleaning apparatus, provided by the embodiment of the present disclosure, may include at least the following steps S701-S703.

In step S701, a physical attribute value of a cleaning portion 10 of a cleaning apparatus is detected.

As shown in FIG. 6, the cleaning apparatus provided by the embodiment may include a detecting device 20, which may be specifically utilized to detect the physical attribute value of the cleaning portion 10. The cleaning apparatus may be, but is not limited to, a sweeping robot, a mopping robot, a floor polishing robot, a weeding robot, or a handheld cleaning apparatus capable of cleaning areas such as floors, wall surfaces, desktops, carpets, walls, or glass. The cleaning portion 10 in the cleaning apparatus may be provided with a cleaning part such as mopping cloth, a mopping sponge or a mopping roller brush, so as to clean the surface to be cleaned.

The detecting device 20 may be an optical detecting device 20 or an electrical detecting device 20, and for the different types of detecting devices 20, the detected and acquired physical attribute values of the cleaning portion 10 in the cleaning apparatus may be different.

In step S702, the degree of dirtiness of the surface to be cleaned is determined by using a comparison result of the physical attribute value and a dynamically set standard attribute value.

After being detected by the detecting device 20, the physical attribute value of the cleaning portion 10 may be used to determine the degree of dirtiness of the surface to be cleaned.

By taking an optical detecting device 20 as an example of the detecting device 20, the detected physical attribute value of the cleaning portion 10 of the cleaning apparatus in step S701 is correspondingly an optical attribute value. Specifically, in the process of detection, the optical emitter 21 may be used to emit an optical signal first, the optical receiver 22 may be used to receive an optical reflection signal formed after reflection by the cleaning portion 10, and the optical reflection signal is converted into a first electrical signal for representing the optical attribute value of the cleaning portion 10. Further, in step S702, the degree of dirtiness of the surface to be cleaned may be calculated by using a difference between the optical attribute value and a standard optical attribute value. The standard optical attribute value includes a pre-detected optical attribute value of the cleaning portion in a clean state, or, an optical attribute value of the cleaning portion detected during power-up operation of the cleaning apparatus.

For example, if the surface of the cleaning portion 10 is covered with a light-colored velvet fabric, the cleaning portion 10 is of light color in a clean state, so the reflection signal reflected by the cleaning portion 10 is of high light intensity. However, when a brush head is dirty, the color of the brush head becomes darker and the reflection signal reflected by the cleaning portion 10 is of low light intensity. Further, the optical receiver 22 may convert the received reflection signals with different intensities into different voltages, and then transmit the different voltages to the processor 30 as the first electrical signals.

Correspondingly, the lighter the color of the cleaning portion 10 is, the higher the light intensity of the reflection signal reflected by the cleaning portion is, and the higher the voltage is; and the darker the color of the cleaning portion 10 is, the lower the light intensity is, and the lower the voltage is. Further, upon receiving the first electrical signal (for example, voltage) transmitted by an optical reflector, the processor 30 may determine the degree of dirtiness of the cleaning portion 10 based on the received voltage according to a comparison result (for example, their difference) with the standard electrical attribute value. Specifically, if the standard electrical attribute value of the light-colored cleaning portion 10 is set to *a*, when the processor 30 receives a higher first electrical signal transmitted by the optical reflector, it means that the cleaning portion 10 is of light color. At this time, the closer the first electrical signal is to *a*, the smaller the difference is, indicating that the degree of dirtiness of the surface to be cleaned is lower (i.e., the surface to be cleaned is relatively clean); and when the first electrical signal is low, it means that the darker the color of the cleaning portion 10 is, the bigger the difference between the voltage and the standard voltage *a* is, and the higher the degree of dirtiness of the surface to be cleaned is at this time (i.e., the surface to be cleaned is relatively dirty).

By taking an electrical detecting device 20 as an example of the detecting device 20, the detected physical attribute value of the cleaning portion 10 of the cleaning apparatus in step S701 is correspondingly an electrical attribute value. Specifically, in the process of detection, a second electrical signal for representing an electrical attribute value of the cleaning portion 10 is detected, and then the degree of dirtiness of the surface to be cleaned is determined according to the electrical attribute value.

Optionally, the second electrical signal may be a parameter such as a conductivity, a capacitance or a resistance. Upon acquisition of the second electrical signal, a capacitance variation parameter, a conductivity variation parameter, a resistance variation parameter, etc. of the cleaning portion 10 may be further calculated based on the second electrical signal, then an electrical-signal variation parameter of the cleaning portion 10 may be calculated based on the electrical attribute value and the standard electrical attribute value, and the degree of dirtiness of the surface to be cleaned may be calculated by using the electrical-signal variation parameter. The standard electrical attribute value includes a pre-detected electrical attribute value of the cleaning portion in a clean state, or, an electrical attribute value of the cleaning portion detected during power-up operation of the cleaning apparatus. For example, the degree of dirtiness of the surface to be cleaned may be determined according to a difference between a real-time detected capacitance of the cleaning portion and the standard capacitance, and the degree of dirtiness of the surface to be cleaned may also be determined according to a difference between a real-time detected conductivity of the cleaning portion and the standard conductivity. According to the method provided by the embodiment of the present disclosure, the degree of dirtiness of the surface to be cleaned may be quickly and efficiently determined without artificial judgment according to different physical states of the cleaning portion 10 during cleaning.

In step S703, a cleaning mode of the cleaning apparatus is adjusted based on the degree of dirtiness.

As stated above, the corresponding operating parameter of the cleaning apparatus varies with the degree of dirtiness of the surface to be cleaned. For example, for a relatively clean floor, only normal cleaning by the apparatus may be required; and for a relatively dirty floor, spraying of more cleaning fluid may be required. Therefore, in the method provided by the embodiment of the present disclosure, the operating power of the fan and/or the motor driving the cleaning portion may be adaptively adjusted according to the degree of dirtiness of the surface to be cleaned. In practice, in addition to the operating power of the fan and the operating power of the motor, relevant operating parameters of the cleaning apparatus, such as a fluid output quantity and a fluid output frequency of the fluid output device in the cleaning apparatus, may also be adjusted simultaneously, which is not limited in the embodiment of the present disclosure.

Optionally, the operating power of the fan and/or the motor may be adjusted by being increased or reduced.

In other words, if the degree of dirtiness of the surface to be cleaned is higher, the fluid output quantity of the fluid output device, a motor power of the cleaning portion, the fluid output frequency of the fluid output device, and/or a fan power of the fluid recovery device may be adaptively increased. That is, during the use of the cleaning apparatus, if the surface to be cleaned is a dirty floor, the water output quantity and the output frequency of the fluid output device, the motor power of the cleaning portion, and the fan power of the fluid recovery device may be increased.

In contrast, if the degree of dirtiness of the surface to be cleaned is lower, the fluid output quantity of the fluid output device, the motor power of the cleaning portion, the fluid output frequency of the fluid output device, and/or the fan power of the fluid recovery device may be adaptively reduced. In other words, during the use of the cleaning apparatus, if the surface to be cleaned is a clean floor, the water output quantity and the output frequency of the fluid output device, the motor power of the cleaning portion, and the fan power of the fluid recovery device may be reduced. During the whole operating process of the cleaning apparatus, the operating parameters of the cleaning apparatus, such as the operating power of the motor and the operating power of the fan, may be adjusted at any time with variation of the real-time detected degree of dirtiness of the surface to be cleaned, so as to ensure the operating efficiency of the cleaning apparatus and reduce the energy consumption.

It can be known from the above embodiment that the degree of dirtiness of the surface to be cleaned may be divided into different levels of dirtiness. In the embodiment of the present disclosure, adjusting the operating power of the fan and/or the motor driving the cleaning portion based on the degree of dirtiness may include the following steps.

In step S1, a plurality of pre-divided levels of dirtiness corresponding to different degrees of dirtiness is acquired. In practice, the number of the levels of dirtiness may be set according to different requirements, or the levels of dirtiness are divided in advance according to the type of the surface to be cleaned or an environment in which the surface to be cleaned is located.

In step S2, the corresponding target level of dirtiness of the surface to be cleaned is determined based on the degree of dirtiness of the surface to be cleaned. Referring to the above embodiments, when the corresponding target level of dirtiness of the surface to be cleaned is determined according to the degree of dirtiness of the surface to be cleaned, recognition and determination may be made according to the determined physical attribute value of the surface to be cleaned. For example, a total of number of four levels, namely, a level 1, a level 2, a level 3 and a level 4, whose degrees of dirtiness are increased in sequence, may be set. In addition, different threshold ranges, namely, a threshold range 1, a threshold range 2, a threshold range 3 and a threshold range 4, may also be divided according to the different physical attribute values of the cleaning portion 10, and a corresponding relationship is built between the threshold ranges and the levels of dirtiness.

In step S3, a cleaning mode of the cleaning apparatus that matches the target level of dirtiness is acquired, and the cleaning apparatus is controlled to work according to a cleaning parameter corresponding to the cleaning mode.

In other words, the corresponding level of dirtiness of the surface to be cleaned may be determined when the degree of dirtiness of the surface to be cleaned is determined. For different levels of dirtiness, the corresponding cleaning mode and the corresponding operating parameter of the cleaning apparatus may be preset. For example, a cleaning mode 1, a cleaning mode 2, a cleaning mode 3 and a cleaning mode 4 which respectively correspond to the level 1, the level 2, the level 3 and the level 4 in S2 may be preset. Further, the cleaning apparatus in the different cleaning modes is of the correspondingly different cleaning parameters. By taking the operating power of the fan and/or the motor driving the cleaning portion as an example, the level 1 corresponds to the fan's operating power x1 and the motor's operating power y1; the level 2 corresponds to the fan's operating power x2 and the motor's operating power y2; the level 3 corresponds to the fan's operating power x3 and the motor's operating power y3; and the level 4 corresponds to the fan's operating power x4 and the motor's operating power y4. During the determination of the target level of dirtiness of the surface to be cleaned corresponding to the multiple levels of dirtiness, the preset fan's operating power and motor's operating power that match the target level of dirtiness are taken as a target fan's operating power and a target motor's operating power required by the current cleaning apparatus, and then the cleaning apparatus is controlled to perform cleaning at the acquired fan's operating power and/or motor's operating power.

In an optional embodiment of the present disclosure, the corresponding cleaning modes and the operating parameters of the cleaning apparatus corresponding to the cleaning modes may be generated by machine learning or set by other means for different levels of dirtiness. After the degree of dirtiness of the surface to be cleaned is determined, the matched cleaning mode may be selected to control the cleaning apparatus to perform cleaning by using the operating parameter of the cleaning apparatus corresponding to the selected cleaning mode. For example, if the level of dirtiness of the surface to be cleaned is high, it means that the surface to be cleaned is relatively dirty; then the corresponding fan's operating power and/or motor's operating power may be increased; and at the same time, the amount of the cleaning fluid, the spraying frequency of the cleaning fluid and the recovery frequency of the dirty fluid may be increased. In contrast, if the level of dirtiness of the surface to be cleaned is low, it means that the surface to be cleaned is relatively clean, then the corresponding fan's operating power and/or motor's operating power may be reduced, and the amount of the cleaning fluid, the spraying frequency of the cleaning fluid and the recovery frequency of the dirty fluid may be reduced. According to the solution provided by the embodiment of the present disclosure, by intelligently adjusting the cleaning mode of the cleaning apparatus according to the level of dirtiness of the surface to be cleaned, cleaning resources can be reasonably distributed and saved while the surface to be cleaned is effectively cleaned.

In an optional embodiment of the present disclosure, a linear operating curve of the cleaning apparatus may also be preset, in which the degree of dirtiness is used as an independent variable and the operating parameters of the cleaning apparatus are used as dependent variables. The operation of the cleaning apparatus may be controlled by using the operating curve to adaptively adjust the operating parameters of the cleaning apparatus based on the detected degree of dirtiness of the surface to be cleaned. The operating parameters may include one or more of the parameters such as the operating power of the fan and/or the motor driving the cleaning portion, the cleaning frequency, the cleaning effort and the water output quantity.

According to the dirtiness detecting method for the cleaning apparatus provided by the embodiment of the present disclosure, the physical attribute value of the cleaning portion 10 in the cleaning apparatus may be detected by the cleaning apparatus per se based on the method provided by the embodiment of the present disclosure. The degree of dirtiness of the surface to be cleaned may be intelligently determined without artificial judgment according to the physical attribute value, which may provide a certain reference basis for the cleaning apparatus to perform cleaning.

Further, according to the method provided by the embodiment of the present disclosure, the surface to be cleaned can be intelligently cleaned in a targeted manner according to the degree of dirtiness of the surface to be cleaned, and the operating parameters of the cleaning apparatus can be flexibly adjusted, such that the intelligence of the cleaning apparatus is improved, rational use of the cleaning resources is ensured, and further, the user experience is improved.

An embodiment of the present disclosure provides a handheld cleaning apparatus, which may include a cleaning portion, a detecting device, a processor and an apparatus body. One end of the apparatus body may be connected to the cleaning portion, and the detecting device is disposed on the cleaning portion or disposed on the apparatus body opposite to the cleaning portion. The apparatus body is provided with a cavity in which the processor is disposed.

The cleaning portion is configured to clean a surface to be cleaned. The detecting device is configured to detect a physical attribute value of the cleaning portion. The processor is electrically connected to the detecting device and configured to acquire the physical attribute value detected by the detecting device, determine, according to the physical attribute value, the degree of dirtiness of the surface to be cleaned, and adjust, based on the degree of dirtiness, an operating power of a fan and/or a motor driving the cleaning portion. In addition, for the relative positions and connection relationships as well as functions of the cleaning portion, the detecting device, and the processor, a reference may be made to records in the foregoing embodiments, which will not be repeated herein.

Optionally, the apparatus body may be of an elongated column with a cavity, and the processor is disposed in the cavity of the apparatus body. The other end of the apparatus body is provided with a handheld portion; and when the cleaning apparatus is in use, an entirety formed by the handheld portion and the apparatus body is inclined relative to the cleaning portion.

Optionally, the cleaning apparatus includes a fluid output device for storing a fluid. The fluid may be a cleaning fluid of any one of clear water, a cleaning agent, or a mixture of clear water and the cleaning agent.

The fluid output device may include a first container and a fluid output pipeline, wherein the first container is configured to store the fluid; and the fluid output pipeline may be communicated with the first container, and the fluid in the first container is transported, by a fluid transport pipeline, to the cleaning portion or the surface to be cleaned. Optionally, the fluid output pipeline may be a hard pipe extending along a path or a hose that may change the path, which may be specifically selected according to the type and the structural design of the cleaning apparatus.

The fluid output device may also include at least one spray nozzle, and a fluid storage device is communicated with the spray nozzle by the fluid output pipeline such that the fluid in the fluid storage device is transported to the spray nozzle by the fluid output pipeline, and in turn the fluid is sprayed onto the cleaning portion and/or the surface to be cleaned.

The fluid output device is provided with a first sensor connected to the processor.

Optionally, the first sensor is disposed in the first container of the fluid output device and configured to detect a fluid level of the first container. Alternatively, the first sensor is disposed in the fluid output pipeline of the fluid output device and configured to detect whether the fluid is in the fluid output pipeline or not. The processor is further configured to determine whether the clean fluid needs to be added into the fluid output device according a detection result of the first sensor.

Optionally, the handheld cleaning apparatus may further include a fluid recovery device for recovering the dirty fluid on the surface to be cleaned.

The fluid recovery device includes a second container for storing the dirty fluid.

The fluid recovery device may further include at least one suction nozzle, as well as a suction pipeline that connects the suction nozzle to the second container. The suction nozzle may be disposed on the cleaning portion and configured to suck the dirty fluid on the cleaning portion and/or the surface to be cleaned, and the sucked dirty fluid is transported to the second container by the suction pipeline.

The fluid recovery device further includes a second sensor, which is disposed in the second container, connected to the processor, and configured to detect the fluid level in the second container. The processor is further configured to determine, according to a detection result of the second sensor, whether it is necessary to clear up the dirty fluid in the second container.

An embodiment of the present disclosure provides a cleaning apparatus, including a cleaning portion, a detecting device, a processor, a fluid output device and a fluid recovery device, wherein the cleaning portion is configured to clean a surface to be cleaned; the detecting device is configured to detect a physical attribute value of the cleaning portion; and the processor is electrically connected to the detecting device and configured to acquire the physical attribute value detected by the detecting device, determine, according to the physical attribute value, the degree of dirtiness of the surface to be cleaned, and adjust, based on the degree of dirtiness, an operating power of a fan and/or a motor driving the cleaning portion. In addition, for the relative positions and connection relationships as well as functions of the cleaning portion, the detecting device, and the processor, a reference may be made to records in the foregoing embodiments, which will not be repeated herein.

The fluid output device is configured to store a fluid, and the fluid may be a cleaning fluid of any one of clear water, a cleaning agent, or a mixture of clear water and the cleaning agent. The fluid recovery device is configured to recover the dirty fluid on the surface to be cleaned.

The fluid output device may include a first container and a fluid output pipeline, wherein the first container is configured to store the fluid; and the fluid output pipeline may be communicated with the first container, and the fluid in the first container is transported, by a fluid transport pipeline, to the cleaning portion or the surface to be cleaned. Optionally, the fluid output pipeline may be a hard pipe extending along a path or a hose that may change the path, which may be specifically selected according to the type and the structural design of the cleaning apparatus.

Optionally, the fluid output device may further include at least one spray nozzle, and a fluid storage device is communicated with the spray nozzle by the fluid output pipeline such that the fluid in the fluid storage device is transported to the spray nozzle by the fluid output pipeline, and in turn the fluid is sprayed onto the cleaning portion and/or the surface to be cleaned.

Optionally, the fluid output device is provided with a first sensor connected to the processor.

Optionally, the first sensor is disposed in the first container of the fluid output device and configured to detect a fluid level of the first container. Alternatively, the first sensor is disposed in the fluid output pipeline of the fluid output device and configured to detect whether a fluid is in the fluid output pipeline or not. The processor is also configured to determine whether the clean fluid needs to be added into the fluid output device according to a detection result of the first sensor.

Optionally, the cleaning apparatus may further include a fluid recovery device for recovering the dirty fluid on the surface to be cleaned.

The fluid recovery device includes a second container for storing the dirty fluid.

The fluid recovery device may further include at least one suction nozzle, as well as a suction pipeline that connects the suction nozzle to the second container. The suction nozzle may be disposed on the cleaning portion and configured to suck the dirty fluid on the cleaning portion and/or the surface to be cleaned, and the sucked dirty fluid is transported to the second container by the suction pipeline.

The fluid recovery device further includes a second sensor, which is disposed in the second container, connected to the processor, and configured to detect the fluid level in the second container. The processor is further configured to determine, according to a detection result of the second sensor, whether it is necessary to clear up the dirty fluid in the second container.

Optionally, the cleaning apparatus may further include a voice prompt device, which is connected to the processor and configured to send voice prompt information. Specifically, the voice prompt device may be configured to send corresponding voice prompt information when the processor determines, according to the detection result of the first sensor, that it is necessary to add the fluid into the fluid output device, and/or that it is necessary to clear up the recovered dirty fluid stored in the fluid recovery device.

Optionally, the cleaning apparatus may further include a display device, which is connected to the processor and configured to display the degree of dirtiness of the surface to be cleaned, the detection result of the first sensor and/or the detection result of the second sensor. Of course, the display device may also display operating parameters, for example, the power of the fan, when the cleaning apparatus is in operation, which is not limited in the present disclosure.

Optionally, the cleaning apparatus may further include an apparatus body, wherein one end of the apparatus body may be connected to the cleaning portion, and the detecting device is disposed on the cleaning portion or disposed on the apparatus body opposite to the cleaning portion.

The apparatus body is provided with a cavity in which the processor, the fluid output device and the fluid recovery device are disposed.

It will be clear to those skilled in the art that for the dirtiness detecting method for the cleaning apparatus mentioned in the embodiment, a reference may be made to the corresponding working process of the cleaning apparatus in the foregoing embodiments, which is not repeated herein for brevity.

In an optional embodiment of the present disclosure, a computer-readable storage medium is further provided. A computer program instruction is stored on the computer-readable storage medium; and the computer program instruction, when executed by a processor, causes the processor to implement the dirtiness detecting method for the cleaning apparatus.

It will be clear to those skilled in the field that for the specific working processes of the system, device, module and unit described above, a reference may be made to the corresponding processes in the method embodiment, which is not repeated herein for brevity.

In addition, all the functional units in the respective embodiments of the present disclosure may be physically independent of each other, or two or more of the functional units may be integrated, or all the functional units may be integrated in one processing unit. The above integrated functional units may be implemented either in the form of hardware or in the form of software or firmware.

It can be understood by those of ordinary skill in the art that the integrated functional units, if implemented in the form of software and sold or used as a standalone product, may be stored in a computer-readable storage medium. Based on such understanding, the technical solution of the present disclosure in essence, or all or part of the technical solution, may be embodied in the form of a software product. The computer software product is stored in a storage medium and includes a plurality of instructions for a computing device (which may be a personal computer, a server, a network device or the like) or a processor to execute all or part of the steps of the method described in the respective embodiments of the present disclosure. The aforementioned storage medium may include: a USB flash disk, a mobile hard disk, a read-only memory (ROM), a random access memory (RAM), a magnetic disk or an optical disk and other media that may store program codes.

Alternatively, all or part of the steps for implementing the foregoing method embodiments may be accomplished by hardware (a computing device such as a personal computer, a server, or a network device) related to program instructions, and the program instructions may be stored in a computer-readable storage medium. The program instructions, when executed by a processor of the computing device, causes the computing device to executes all or part of the steps of the method described in the respective embodiments of the present disclosure.

At last, it shall be noted that the above embodiments are only used to illustrate, instead of limiting, the technical solutions of the present disclosure. Although the present disclosure is described in detail with reference to the foregoing embodiments, those of ordinary skill in the art shall understand that within the spirit and principles of the present disclosure, they can still modify the technical solutions described in the foregoing embodiments, or make equivalent substitutions for some or all of the technical features; and these modifications or substitutions do not deviate the corresponding technical solutions from the protection scope of the present disclosure.

## Claims

1. A cleaning apparatus, comprising:
a cleaning portion configured to clean a surface to be cleaned;
a detecting device configured to detect a physical attribute value of the cleaning portion; and
a processor configured to acquire the physical attribute value detected by the detecting device, determine, by using a comparison result of the physical attribute value and a dynamically set standard attribute value, a degree of dirtiness of the surface to be cleaned, and adjust a cleaning mode of the cleaning apparatus based on the degree of dirtiness.

2. The cleaning apparatus according to claim 1, wherein the detecting device is disposed on or opposite to the cleaning portion.

3. The cleaning apparatus according to claim 1, wherein the detecting device comprises an optical detecting device for detecting an optical attribute value of the cleaning portion.

4. The cleaning apparatus according to claim 3, wherein the detecting device comprises an optical emitter and an optical receiver;
the optical emitter is configured to emit an optical signal to the cleaning portion;
the optical receiver is configured to receive an optical reflection signal formed by reflection via the cleaning portion, convert the optical reflection signal into a first electrical signal for representing the optical attribute value of the cleaning portion, and output the first electrical signal to the processor; and
the processor is configured to calculate, by using the optical attribute value, the degree of dirtiness of the surface to be cleaned.

5. The cleaning apparatus according to claim 4, wherein the first electrical signal comprises a voltage for representing the optical attribute value; and
the processor is configured to compare the voltage with a standard voltage and determine, according to a comparison result, the degree of dirtiness of the surface to be cleaned; and the standard voltage is a pre-detected voltage of the cleaning portion in a clean state, or, a voltage of the cleaning portion detected during power-up operation of the cleaning apparatus.

6. The cleaning apparatus according to claim 4, wherein the optical receiver and the optical receiver are disposed on the same side.

7. The cleaning apparatus according to claim 1, wherein the detecting device comprises an electrical detecting device for detecting an electrical attribute value of the cleaning portion.

8. The cleaning apparatus according to claim 7, wherein the cleaning portion is provided with an electrode;
the detecting device is connected to the electrode on the cleaning portion, and configured to detect a second electrical signal for representing an electrical attribute value of the cleaning portion and output the second electrical signal to the processor; and
the processor is configured to calculate, by using the electrical attribute value, the degree of dirtiness of the surface to be cleaned.

9. The cleaning apparatus according to claim 8, wherein the detecting device is a capacitive sensor for detecting a capacitance of the cleaning portion and outputting the capacitance to the processor as the second electrical signal; and
the processor is configured to calculate a capacitance variation parameter of the cleaning portion according to the capacitance and a standard capacitance, and determine, by using the capacitance variation parameter, the degree of dirtiness of the surface to be cleaned.

10. The cleaning apparatus according to claim 8, wherein
the detecting device is configured to detect a conductivity of the cleaning portion and output the conductivity to the processor as the second electrical signal; and
the processor is configured to calculate a conductivity variation parameter of the cleaning portion according to the conductivity and a standard conductivity, and calculate, by using the conductivity variation parameter, the degree of dirtiness of the surface to be cleaned.

11. The cleaning apparatus according to claim 1, further comprising a fluid output device and a fluid recovery device, wherein
the fluid output device is configured to spray a fluid onto the cleaning portion or the surface to be cleaned, and
the fluid recovery device is configured to cause a dirty fluid on the surface to be cleaned or the cleaning portion to flow into the fluid recovery device through a dirty-fluid drainage pipeline.

12. The cleaning apparatus according to claim 11, wherein the fluid output device comprises:
a first container for storing the fluid;
a fluid output pipeline communicated with the first container and configured to transport the fluid in the first container to the cleaning portion or the surface to be cleaned; and
at least one spray nozzle communicated with the fluid output pipeline and configured to spray the fluid onto the cleaning portion or the surface to be cleaned.

13. The cleaning apparatus according to claim 11, wherein the fluid recovery device comprises:
a second container for storing the dirty fluid;
a second sensor disposed in the second container and configured to detect a fluid level in the second container;
at least one suction nozzle configured to suck the dirty fluid on the cleaning portion or the surface to the cleaned; and
a suction pipeline that connects the at least one suction nozzle to the second container and is configured to suck the dirty fluid from the suction nozzle into the second container.

14. A dirtiness detecting method for a cleaning apparatus, comprising:
detecting a physical attribute value of a cleaning portion of a cleaning apparatus;
determining, by using a comparison result of the physical attribute value and a dynamically set standard attribute value, a degree of dirtiness of a surface to be cleaned; and
adjusting a cleaning mode of the cleaning apparatus based on the degree of dirtiness;
wherein the cleaning portion is configured to clean the surface to be cleaned.

15. The method according to claim 14, wherein the physical attribute value comprises an optical attribute value;
detecting the physical attribute value of the cleaning portion of the cleaning apparatus comprises: emitting an optical signal by an optical emitter; receiving, by an optical receiver, an optical reflection signal formed by reflection via the cleaning portion; and converting, by the optical receiver, the optical reflection signal into a first electrical signal for representing an optical attribute value of the cleaning portion; and
determining, by using the comparison result of the physical attribute value and the dynamically set standard attribute value, the degree of dirtiness of the surface to be cleaned comprises: calculating, by using a difference between the optical attribute value and a standard optical attribute value, the degree of dirtiness of the surface to be cleaned;
wherein the standard optical attribute value comprises a pre-detected optical attribute value of the cleaning portion in a clean state, or, an optical attribute value of the cleaning portion detected during power-up operation of the cleaning apparatus.

16. The method according to claim 14, wherein the physical attribute value comprises an electrical attribute value;
detecting the physical attribute value of the cleaning portion of the cleaning apparatus comprises: detecting a second electrical signal for representing an electrical attribute value of the cleaning portion, the second electrical signal including at least one of a conductivity, a capacitance and a resistance; and
determining, by using the comparison result of the physical attribute value and the dynamically set standard attribute value, the degree of dirtiness of the surface to be cleaned comprises: calculating, according to the electrical attribute value and a standard electrical attribute value, an electrical-signal variation parameter of the cleaning portion, and calculating, by using the electrical-signal variation parameter, the degree of dirtiness of the surface to be cleaned;
wherein the standard electrical attribute value comprises a pre-detected electrical attribute value of the cleaning portion in a clean state, or, an electrical attribute value of the cleaning portion detected during power-up operation of the cleaning apparatus.

17. The method according to any one of claims 14 to 16, wherein adjusting the cleaning mode of the cleaning apparatus based on the degree of dirtiness comprises:
acquiring a plurality of pre-divided levels of dirtiness corresponding to different degrees of dirtiness;
determining, based on the degree of dirtiness of the surface to be cleaned, a target level of dirtiness corresponding to the surface to be cleaned; and
acquiring a cleaning mode of the cleaning apparatus that matches the target level of dirtiness, and controlling the cleaning apparatus to work according to a cleaning parameter corresponding to the cleaning mode, the cleaning parameter including an operating power of a fan and/or a motor driving the cleaning portion.
